# EUROPEAN PATENT SPECIFICATION

(11) **EP 0 591 239 B1**
(45) Date of publication and mention of the grant of the patent: **21.01.1998**
(21) Application number: 92910517.9
(22) Date of filing: 22.05.1992
(51) Int. Cl.: G01B 7/06

(54) **FILM THICKNESS MEASURING CAPACITIVE SENSOR**
KAPAZITIEVER SENSOR ZUM SCHICHTDICKENMESSEN
CAPTEUR CAPACITIF DE MESURE D'EPAISSEUR DE FILM

(30) Priority: 23.05.1991 GB 9111140
(43) Date of publication of application: 13.04.1994
(73) Proprietor: SUSSEX INSTRUMENTS PLC, Lewes, East Sussex BN7 2BY (GB)
(72) Inventor: HAYNES, Anthony, Charles, Rendell, Cuilfail Lewes BN7 2BE (GB)
(74) Representative: Tomlinson, Kerry John
(86) International application number: GB9200934
(87) International publication number: WO9220989

(56) References cited:
- EP-A- 0 078 095
- WO-A-84/02772
- WO-A-91/15730
- DE-A- 3 612 914
- US-A- 4 498 045

## Description

The present invention relates to capacitive sensors for measuring the thickness of films.

The principles of the capacitive measurement of film thickness are well known. The film slides over an arrangement of measuring electrodes which contact with one side of the film surface. The capacitive fringe field of the electrodes curves through the film and back again, and the capacitance of the electrode arrangement is increased in proportion to the value of the dielectric constant of the film and its thickness. This change in capacitance is sensed by appropriate electronic circuitry well known in the art, and converted into an appropriate signal indicative of the film thickness. Such sensors do not measure thickness absolutely, since in practice the value of the film's dielectric constant is not known and may vary with temperature. Therefore, the sensor is calibrated by adjusting the gain of an electronic amplifier connected to the sensor, until the capacitive measurement matches that of an absolute gauge such as a micrometer. Once calibrated, the sensor is able to measure the film thickness to a high degree of accuracy and so is able to provide, for example, feedback for controlling a film production process.

For the sensors to provide measurements of repeatable accuracy, the electrodes and the film must remain in fixed relation to one another, because their relative movement would affect the capacitance readings. Also, the sensor and film must be kept quite close to one another due to the rapid decrease in the strength of the capacitive field with distance from the electrodes. This means that, in practice, either the electrodes of the prior art sensors must directly contact the film, or the sensors must have guides touching the film which keep the electrodes and film a fixed and short distance apart. It would be impracticable to accurately hold the prior art sensors a fixed distance from the film without using touching guides, and in many cases, such as when the film thickness of a pressurised bubble is being measured, the point on the film surface at which the sensor is to make its readings must be deformed slightly out of its normal shape so that the film may remain at a constant separation across the electrode surfaces. If one were to merely hold the sensor out of contact with the film bubble, then the convex shape of the film surface and variations in its position would produce a non-constant gap width.

Thus, although such contacting sensors may be satisfactory for many materials used for film production, such as low and high density polyethylene and some polypropylene and PVC types, the sensors are unsuitable for measuring a number of films such as, for example, sticky-surfaced film, which does not slide easily over the electrodes or guides, and BOPP film (biaxially oriented polypropylene), which is sold to be optically clear and is easily scratched.

Moreover, some plastics exude small quantities of solid or liquid, which can become deposited on the contacting electrode surfaces or guides and can alter the capacitive readings.

WO-A-91/15730, DE-A-3612914 and EP-A-78095 disclose systems for measuring the thickness of materials by passing them through the main field of a pair of opposed electrodes, that is with an electrode mounted on each side of the material, and disclose the use of an air cushion between the electrodes and the material. US-A-4498045 discloses apparatus for determining the surface contours of a piezoelectric wafer in which the wafer is mounted on a grounded base, and an electrode passed across the top of the wafer out of contact therefrom.

The present invention provides a sensor and method for the contactless measurement of the thickness of a film or sheet as defined in claims 1 and 16.

The gas layer provides a protective cushion between the film and the electrode arrangement of the sensor, and allows the separation between the film and sensor to be small and constant, whilst ensuring that no contact is made between the sensor and film. This lack of direct contact and the ability to provide a small constant separation distance allows the sensor to be used with sticky films, prevents scratching of the film and prevents the formation of deposits on the electrodes.

Moreover, when the sensor is used on a film in the form of a pressurised bubble, for example in the on-line testing of the production of BOPP film, the sensor may deform the shape of the film to conform to that of the electrodes, with the pressure of the protective gas layer balancing against the pressure inside the film bubble.

The pressure of the gas supplied to the sensor and the total cross sectional area of the gas outlet means determine the average gas layer thickness, so, for example, the pressure of air supplied to a sensor may be in the region of 6,9 kPa (1 PSI) with the gas outlet means providing a restriction to lower the pressure to a value consistent with that of the film bubble. The film bubble pressure is, in the above situation, typically below 10 mm water gauge, and most of the pressure of the gas layer drops over the area of the gas outlet means. If the gas gap widens locally, the pressure of the gas layer is lower at that point, and the film is pushed towards the sensor. Such a system is therefore self-balancing and tends to maintain a uniform gas layer thickness between the film and sensor.

The use of a central electrode surrounded by an outer electrode allows for a compact and sensitive device.

The gas outlet means preferably comprises a number of ports disposed around the central electrode and may advantageously be formed in the outer electrode. It would however be possible for the ports to be formed elsewhere, for example in an insulator provided between the electrodes or between the electrodes themselves.

In one arrangement of the sensor, the central and outer electrodes are mounted on a backboard, with the central electrode being in the form of a cylindrical rod extending from the backboard, and the outer electrode forming a housing around the central electrode to define an inner annular chamber. The electrodes are separated by an insulator at the sensing surface of the sensor, and electronics for the sensor may be mounted on the backboard. When the sensor takes this form, the pressurised gas may be supplied to the gas outlet means via the inner annular chamber. This arrangement however has the disadvantage that oil and water pollutants from the gas could short and disrupt the connections between the electronics, since the connections are located on the surface of the backboard facing the inner chamber. Therefore, extra precautions such as filters may need to be provided.

In a preferred form, the outer electrode comprises an inner skin and an outer skin between which is defined a gas passage for supplying the gas outlet means with pressurised gas. This provides the advantage that the gas bypasses the electrical connections and so precautions such as filtering of the gas supply are not so important. Moreover, the outer skin may be adapted to be removable from the inner skin, for example by being connected to the inner skin by a screw thread. This makes the gas passage easily accessible for cleaning purposes.

In a preferred form, the gas outlet means comprises an annular opening between the outer and inner skins of the outer electrode, although it could equally comprise ports. Preferably, the gas passage has a larger cross-sectional area than the gas outlet means, in order to allow the inner gas pressure and the gas pressure of the layer to stabilise.

Preferably the gas outlet means is supplied with a regulated pressure. This may be achieved by fitting a pressure sensor to sense the pressure of gas supplied to the gas outlet means and controlling a source of pressurised gas in dependence on the sensed pressure. Alternatively a pressure regulator, e.g. a spring-loaded valve, may be built into the sensor.

Preferably, the sensing surface of the sensor, which faces the film, is curved, in use, away from the film, at least in the edge region of this surface, to take account of the deformation of the film in the gas flow which will tend to be greater toward the centre of the gas layer.

Sensors according to the invention may be used on many types of film, and wherever direct contact with a film is undesirable. The electrodes may be arranged in a variety of manners and may have any of a number of shapes, such as oval or rectangular.

Where the film is in the form of a flat rigid sheet which cannot flex to conform to the sensor electrodes and cannot therefore make good contact, a sensor according to the invention, with preferably electrodes having flat sensing surfaces and flexible mounting gimbals, may advantageously be used, as it would float on the surface of this flat sheet and the electrodes would remain parallel to the surface of the sheet, even if the sensor itself were tilted at an angle. Moreover the absence of friction would prevent turning moments from upsetting the sensor's stability.

Embodiments of the invention will now be described, by way of example only, with reference to the accompanying drawings, in which:
Fig. 1 shows a cross-sectional view of a sensor according to a first embodiment of the present invention; and
Fig. 2 shows a cross-sectional view of a sensor according to a second embodiment of the present invention.

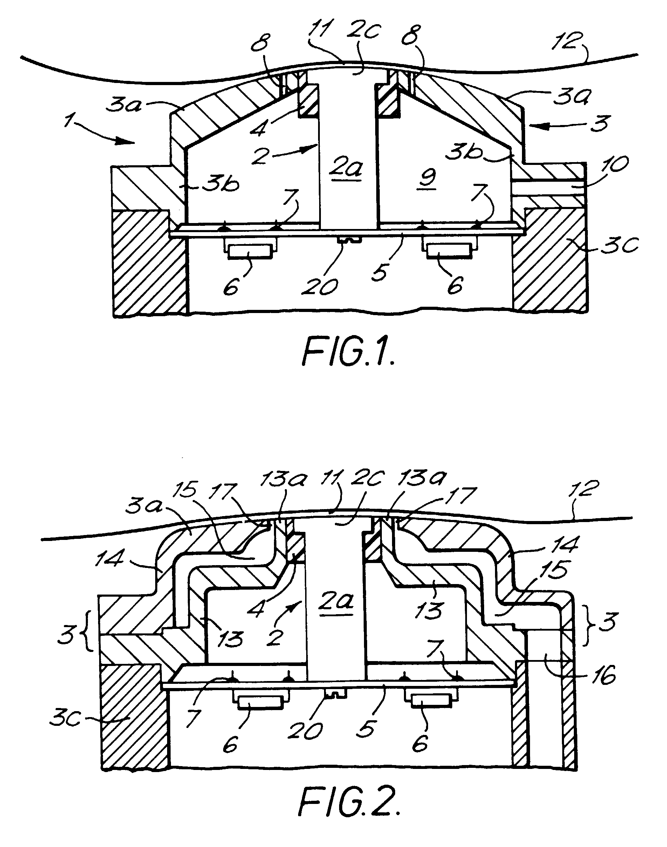

Referring firstly to Fig. 1, the sensor 1 comprises a central electrode 2, an outer electrode 3, an insulator 4, and a backboard 5 on which is mounted electronic circuitry 6 connected via tracks 7.

The central electrode 2 extends from the backboard 5 and is connected at its backboard mounting to the sensor electronics 6. The central electrode 2 has a cylindrical portion 2a and an enlarged sensing surface portion 2c. The cylindrical portion 2a has an internal thread (not shown) whereby it can be secured to the backboard 5 by a screw 20.

The outer electrode 3 forms the housing of the sensor 1, and comprises a sensing surface 3a extending around the sensing surface 2c of the central electrode, and a wall portion 3b connected to a securing ring 3c by for example screw threads or bolts so as to sandwich the backboard 5 therebetween. The outer electrode 3 is connected to ground via an annular contact (not shown) disposed between the end of the wall portion 3b and the backboard 5.

Air outlet means is provided by ports 8 formed in the outer electrode 3 and disposed radially about the central electrode 2. The ports 8 are connected to an inner chamber 9 defined by the central and outer electrodes 2,3. Air is supplied to the sensor 1 via inlet port 10, and flows via chamber 9 through ports 8 to produce a layer of air 11 between the sensor 1 and the film 12 whose thickness is being measured.

The layer of air 11 prevents contact with the film 12 and also helps to maintain a constant spacing between the sensor electrode surfaces 2c,3a and the film 12.

Both the central electrode sensing surface 2c and the outer electrode sensing surface 3a are curved.

Referring now to Fig. 2, the sensor shown is similar in many respects to the sensor of Fig. 1. Therefore, the same reference numerals are used for similar elements.

In this embodiment, the outer electrode 3 comprises an inner skin 13 and an outer skin 14, between which is defined an annular air passage 15 to which air is supplied via inlet 16, and which terminates at air outlet means comprising an annular opening 17 surrounding the sensing surface 13a of the inner skin 13. The sensor 1 works in the same manner as in the last embodiment, but the pressurised air is prevented from contacting the tracks 7 mounted in chamber 9.

In order to allow the inner pressure to equalise and to produce a uniform air curtain, the cross-sectional area of the air passage 15 is much larger than that of the annular opening 17. Thus the air outlet means provides a restriction in the air flow.

Also in this embodiment, the curvature of the sensing surface 2c of the central electrode 2 is of much greater radius than in the first embodiment. In either embodiment, the sensing surface 2c could even be flat in certain circumstances.

In both embodiments, the air pressure fed to the sensor is regulated between about 6.9 to 20.7 kPa (1 to 3 PSI), to maintain a small constant air gap between the sensor 1 and film 11. The pressure is set at a value just in excess of the level at which direct physical contact with the film is lost, and although this results in the loss of measurement sensitivity in the order of between about 10 to 20%, this can be restored by adjusting the calibration sensitivity of the electronic circuitry used with the sensor.

With regard to the electronic circuitry 6, many circuits for measuring capacitance are known. As an example, the sensing electrodes may form the frequency determining capacitor of an oscillator circuit, with a reference oscillating circuit having a similar inductance as the first oscillating circuit and having its frequency fixed by a variable capacity diode during an auto-zeroing cycle. In this example, during the auto-zero cycle, a computer monitors the beat frequency between the two oscillators while there is no film by the electrodes and then controls the voltage on the variable capacity diode to attain a low initial beat frequency. During the measurement cycle the feedback voltage to the variable capacity diode is held constant and the beat frequency rises with the thickness of the film being measured. Of course, other techniques, such as the use of an a.c. bridge, could be used.

## Claims

1. A capacitive sensor (1) for the non-contact measurement of the thickness of a film or sheet (12), the sensor (1) comprising:
a central electrode (2) and an outer electrode (3) surrounding the central electrode (2), the capacitance between the electrodes (2,3) depending on the presence of a film or sheet (12) in the capacitive fringe field of the electrodes (2,3);
gas outlet means (8,17) for providing, in use, a layer of pressurised gas (11) between the sensor (1) and the film or sheet (12) when gas is supplied to the outlet means (8,17); and
electronic means (6) for determining the thickness of the film or sheet (12) from a capacitance measured between the electrodes (2,3) when the film or sheet (12) is held away from the electrodes (2,3) by said layer of pressurised gas (11).

2. A sensor according to claim 1, wherein the gas outlet means (8,17) provides a restriction in the gas flow.

3. A sensor according to claim 1 or 2, wherein the central electrode (2) is circular.

4. A sensor according to claim 1, 2 or 3, wherein the gas outlet means comprises a number of ports (8) disposed around the central electrode (2).

5. A sensor according to any preceding claim, wherein the gas outlet means (8,17) is formed in the outer electrode (3).

6. A sensor according to any preceding claim, wherein the electrodes (2,3) are separated by an insulator (4) at the sensing surface (2c,3a) of the sensor (1).

7. A sensor according to any preceding claim, wherein the central and outer electrodes (2,3) are mounted on a backboard (5), with the central electrode (2) being in the form of a cylindrical rod (2a) extending from the backboard (5), and the outer electrode (3) forming a housing around the central electrode (2) to define an inner annular chamber (9).

8. A sensor according to claim 7, wherein the pressurised gas is supplied to the gas outlet means (8,17) via the inner annular chamber (9).

9. A sensor according to any of claims 1 to 7, wherein the outer electrode (3) comprises an inner skin (13) and an outer skin (14) between which is defined a gas passage (15) for supplying the gas outlet means (17) with pressurised gas.

10. A sensor according to claim 9, wherein the outer skin (14) is adapted to be removable from the inner skin (13).

11. A sensor according to claim 9 or 10, wherein the gas outlet means comprises an annular opening (17) between the outer and inner skins (13,14) of the outer electrode (3).

12. A sensor according to claim 9, 10 or 11, wherein the gas passage (15) has a larger cross-sectional area than the gas outlet means (17).

13. A sensor according to any preceding claim, wherein the sensing surface (2c,3a) of the sensor (1), which faces the film or sheet (12), is curved, in use, away from the film or sheet (12), at least in the edge region (2c) of this surface (2c,3a).

14. A sensor according to any of claims 1 to 12, wherein the sensor (1) comprises electrodes (2,3) having flat sensing surfaces (2c,3a) and flexible mounting gimbals.

15. A sensor according to any preceding claim, comprising means for regulating the pressure of gas supplied to the gas outlet means (8,17).

16. A method of capacitively measuring the thickness of a film or sheet (12) without contacting the film or sheet (12), the method comprises the steps of:
placing a capacitive sensor (1) adjacent one surface of the film or sheet (12), the sensor (1) having a face opposing the film or sheet (12) which includes a central electrode (2) and an outer electrode (3) surrounding the central electrode (2);
constantly passing pressurised gas between the film or sheet (12) and the electrodes (2,3) of the capacitive sensor (1) to keep the film or sheet (12) and the electrodes (2,3) a set distance apart; and
determining the thickness of the film or sheet (12) by detecting a change in capacitance in the fringe field between the electrodes (2,3) when the sensor (1) is placed adjacent the film or sheet (12).

17. A method as claimed in claim 16, wherein gas is provided through gas outlet means (8,17) provided in or between the electrodes (2,3) of the sensor (1).

18. A method as claimed in claim 17, wherein the gas outlet means (8,17) provides a restriction in the gas flow.

19. A method as claimed in claim 17 or 18, wherein gas is supplied to the gas outlet means (8,17) at a regulated pressure.

20. A method as claimed in any of claims 16 to 19, including the step of forming the film or sheet (12) into a portion of a bubble, the sensor (1) being placed adjacent the surface of the bubble (12).

21. A method for the on-line testing of the production of a film or sheet, the method using the method of any of claims 16 to 20.

## Patentansprüche

1. Kapazitiver Sensor (1) für das berührungslose Messen der Dicke eines Films oder einer Lage (12), wobei der Sensor (1) umfaßt:
eine Mittelelektrode (2) und eine Außenelektrode (3), die die Mittelelektrode (2) umgibt, wobei die Kapazität zwischen den Elektroden (2, 3) von dem Vorhandensein eines Films oder einer Lage (12) in dem kapazitiven Randfeld der Elektroden (2, 3) abhängt;
Gasauslaßmittel (8, 17) zum Bereitstellen einer Schicht von Druckgas (11) zwischen dem Sensor (1) und dem Film oder der Lage (12) im Gebrauch, wenn Gas den Auslaßmitteln (8, 17) zugeführt wird; und
elektronische Mittel (6) zum Bestimmen der Dicke des Films oder der Lage (12) aus einer Kapazität, die zwischen den Elektroden (2, 3) gemessen wird, wenn der Film oder die Lage (12) durch die Schicht von Druckgas (11) von den Elektroden (2, 3) weggehalten wird.

2. Sensor nach Anspruch 1, bei welchem die Gasauslaßmittel (8, 17) eine Begrenzung in dem Gasstrom vorsehen.

3. Sensor nach einem der Ansprüche 1 oder 2, bei welchem die Mittelelektrode (2) kreisförmig ist.

4. Sensor nach einem der Ansprüche 1, 2 oder 3, bei welchem die Gasauslaßmittel mehrere Öffnungen (8) aufweisen, die um die Mittelelektrode (2) herum angeordnet sind.

5. Sensor nach einem der vorhergehenden Ansprüche, bei welchem die Gasauslaßmittel (8, 17) in der Außenelektrode (3) ausgebildet sind.

6. Sensor nach einem der vorhergehenden Ansprüche, bei welchem die Elektroden (2, 3) durch einen Isolator (4) an der Fühloberfläche (2c, 3a) des Sensors (1) getrennt sind.

7. Sensor nach einem der vorhergehenden Ansprüche, bei welchem die Mittel- und Außenelektroden (2, 3) an einer Rückplatte (5) angebracht sind, wobei die Mittelelektrode (2) die Form eines zylindrischen Stabs (2a) aufweist, der sich von der Rückplatte (5) erstreckt, und die Außenelektrode (3) ein Gehäuse um die Mittelelektrode (2) herum bildet, um eine Innenringkammer (9) festzulegen.

8. Sensor nach Anspruch 7, bei welchem das Druckgas den Gasauslaßmitteln (8, 17) über die Innenringkammer (9) zugeführt wird.

9. Sensor nach einem der Ansprüche 1 bis 7, bei welchem die Außenelektrode (3) eine Innenhaut (13) und eine Außenhaut (14) umfaßt, zwischen denen ein Gasdurchlaß (15) zum Versorgen der Gasauslaßmittel (17) mit Druckgas festgelegt ist.

10. Sensor nach Anspruch 9, bei welchem die Außenhaut (14) derart ausgeführt ist, daß sie von der Innenhaut (13) entfernbar ist.

11. Sensor nach Anspruch 9 oder 10, bei welchem die Gasauslaßmittel eine Ringöffnung (17) zwischen den Außen- und Innenhäuten (13, 14) der Außenelektrode (3) umfassen.

12. Sensor nach Anspruch 9, 10 oder 11, bei welchem der Gasdurchlaß (15) eine größere Querschnittsfläche aufweist als die Gasauslaßmittel (17).

13. Sensor nach einem der vorhergehenden Ansprüche, bei welchem die Fühloberfläche (2c, 3a) des Sensors (1), die dem Film oder der Lage (12) zugewandt ist, in Gebrauch wenigstens im Randbereich (2c) dieser Oberfläche (2c, 3a) von dem Film oder der Lage (12) weggewölbt ist.

14. Sensor nach einem der Ansprüche 1 bis 12, bei welchem der Sensor (1) Elektroden (2, 3) umfaßt, die ebene Fühloberflächen (2c, 3a) und flexible Befestigungsbügel aufweisen.

15. Sensor nach einem der vorhergehenden Ansprüche, umfassend Mittel zum Regulieren des Drucks von Gas, das den Gasauslaßmitteln (8, 17) zugeführt wird.

16. Verfahren zum kapazitiven Messen der Dicke eines Films oder einer Lage (12), ohne den Film oder die Lage (12) zu berühren, wobei das Verfahren die Schritte umfaßt:
Anordnen eines kapazitiven Sensors (1) benachbart einer Oberfläche des Films oder der Lage (12), wobei der Sensor (1) eine Fläche aufweist, die dem Film oder der Lage (12) gegenüberliegt, und eine Mittelelektrode (2) und eine Außenelektrode (3) aufweist, die die Mittelelektrode (2) umgibt;
konstantes Durchführen von Druckgas zwischen dem Film oder der Lage (12) und den Elektroden (2, 3) des kapazitiven Sensors (1), um den Film oder die Lage (12) und die Elektroden (2, 3) in einem eingestellten Abstand voneinander entfernt zu halten; und
Bestimmen der Dicke des Films oder der Lage (12) durch Erfassen einer Veränderung in der Kapazität in dem Randfeld zwischen den Elektroden (2, 3), wenn der Sensor (1) benachbart zu dem Film oder der Lage (12) angeordnet wird.

17. Verfahren nach Anspruch 16, bei welchem Gas durch Gasauslaßmittel (8, 17) bereitgestellt wird, die in oder zwischen den Elektroden (2, 3) des Sensors (1) vorgesehen sind.

18. Verfahren nach Anspruch 17, bei welchem die Gasauslaßmittel (8, 17) eine Begrenzung in dem Gasstrom vorsehen.

19. Verfahren nach Anspruch 17 oder 18, bei welchem Gas bei einem regulierten Druck den Gasauslaßmitteln (8, 17) zugeführt wird.

20. Verfahren nach einem der Ansprüche 16 bis 19, umfassend den Schritt des Formens des Films oder der Lage (12) zu einem Teil einer Blase, wobei der Sensor (1) benachbart der Oberfläche der Blase (12) angeordnet wird.

21. Verfahren zum Online-Prüfen der Erzeugung eines Films oder einer Lage, wobei das Verfahren das Verfahren nach einem der Ansprüche 16 bis 20 anwendet.

## Revendications

1. Capteur capacitif (1) pour la mesure sans contact de l'épaisseur d'un film ou d'une feuille (12), le capteur (1) comprenant :
une électrode centrale (2) et une électrode extérieure (3) entourant l'électrode centrale (2), la capacité entre les électrodes (2,3) dépendant de la présence d'un film ou d'une feuille (12) dans la zone de bord capacitive des électrodes (2,3);
des moyens de sortie de gaz (8,17) pour produire, en fonctionnement, une couche de gaz comprimé (11) entre le capteur (1) et le film ou la feuille (12) lorsque le gaz est envoyé aux moyens de sortie (8,17); et
des moyens électroniques (6) pour déterminer l'épaisseur du film ou de la feuille (12) à partir d'une capacité mesurée entre les électrodes (2,3) lorsque le film ou la feuille (12) est maintenu à l'écart des électrodes (2,3) par ladite couche de gaz comprimé (11).

2. Capteur selon la revendication 1, dans lequel les moyens (8,17) de sortie du gaz produisent un étranglement dans l'écoulement du gaz.

3. Capteur selon la revendication 1 ou 2, dans lequel l'électrode centrale (2) est circulaire.

4. Capteur selon la revendication 1, 2 ou 3, dans lequel les moyens de sortie du gaz comprennent un nombre d'orifices (8) disposés autour de l'électrode centrale (2).

5. Capteur selon l'une quelconque des revendications précédentes, dans lequel les moyens de sortie de gaz (8,17) sont formés dans l'électrode extérieure (3).

6. Capteur selon l'une quelconque des revendications précédentes, dans lequel les électrodes (2,3) sont séparées par un isolant (4) au niveau de la surface de détection (2c,3a) du capteur (1).

7. Capteur selon l'une quelconque des revendications précédentes, dans lequel l'électrode centrale et les électrodes extérieures (2,3) sont montées sur un panneau arrière (5), l'électrode centrale (2) se présentant sous la forme d'une tige cylindrique (2a) s'étendant à partir du panneau arrière (5), l'électrode extérieure (3) formant un boîtier autour de l'électrode centrale (2) pour définir une chambre annulaire intérieure (9).

8. Capteur selon la revendication 7, dans lequel le gaz comprimé est envoyé aux moyens formant sortie de gaz (8,17) par l'intermédiaire de la chambre annulaire intérieure (9).

9. Capteur selon l'une quelconque des revendications 1 à 7, dans lequel l'électrode extérieure (3) comprend une peau intérieure (13) et une peau extérieure (14), entre lesquelles est défini un passage (15) pour le gaz pour alimenter en gaz comprimé les moyens (17) de sortie du gaz.

10. Capteur selon la revendication 9, dans lequel la peau extérieure (14) est adaptée pour pouvoir être retirée de la peau intérieure (13).

11. Capteur selon la revendication 9 ou 10, dans lequel les moyens de sortie des gaz comprennent une ouverture annulaire (17) formée entre les peaux extérieure et intérieure (13,14) de l'électrode extérieure (3).

12. Capteur selon la revendication 9, 10 ou 11, dans lequel le passage (15) pour le gaz possède une surface en coupe transversale plus étendue que les moyens (17) de sortie du gaz.

13. Capteur selon l'une quelconque des revendications précédentes, dans lequel la surface de détection (2c,3c) du capteur (1), qui est tournée vers le film ou la feuille (12), est incurvée en fonctionnement en s'écartant du film ou de la feuille (12), au moins dans la région (2c) du bord de cette surface (2c,3a).

14. Capteur selon l'une quelconque des revendications 1 à 12, dans lequel le capteur (1) comprend des électrodes (2,3) ayant des surfaces de détection plates (2c,3a) et des suspensions à la cardan flexibles.

15. Capteur selon l'une quelconque des revendications précédentes, comprenant des moyens pour régler la pression du gaz envoyé aux moyens (8,17) de sortie du gaz.

16. Procédé de mesure capacitive de l'épaisseur d'un film ou d'une feuille (12) sans contact avec la feuille ou le film (12), le procédé comprenant les étapes consistant à :
placer un capteur capacitif (1) au voisinage d'une surface du film ou de la feuille (12), le capteur (1) possédant une face située en vis-à-vis du film ou de la feuille (2) et qui comporte une électrode centrale (2) et une électrode extérieure (3) entourant l'électrode centrale (2);
faire passer en permanence un gaz comprimé entre le film ou la feuille (12) et les électrodes (2,3) du capteur capacitif (1) pour maintenir le film ou la feuille (12) et les électrodes (2,3) séparés par une distance réglée; et
déterminer l'épaisseur du film ou de la feuille (12) par détection d'une modification de la capacité du champ marginal entre les électrodes (2,3), lorsque le capteur (1) est placé au voisinage du film ou de la feuille (12).

17. Procédé selon la revendication 16, dans lequel le gaz est amené à traverser les moyens (8,17) de sortie du gaz, prévus dans ou entre les électrodes (2,3) du capteur (1).

18. Procédé selon la revendication 17, selon lequel les moyens (8,17) de sortie du gaz produisent une limitation de l'écoulement du gaz.

19. Procédé selon la revendication 17 ou 18, dans lequel le gaz est envoyé aux moyens (8,17) de sortie du gaz, à une pression réglée.

20. Procédé selon l'une quelconque des revendications 16 à 19, comprenant l'étape consistant à former le film ou la feuille (12) dans une partie d'une bulle, le capteur (1) étant disposé au voisinage de la surface de la bulle (12).

21. Procédé pour tester en direct la production d'un film ou d'une feuille, ce procédé utilisant le procédé selon l'une quelconque des revendications 16 à 20.
